# EUROPEAN PATENT APPLICATION

(11) **EP 4 847 233 A2**
(43) Date of publication of application: **02.12.2026**
(21) Application number: 26205973.6
(22) Date of filing: 18.09.2026
(51) Int. Cl.: B29C 64/255, B29C 64/124, B29C 64/259, B29C 64/321, B33Y 10/00, B33Y 30/00, B33Y 40/00

(54) **CONTAINER ASSEMBLY, PRINITNG DEVICE AND PRINTING SYSTEM**

(30) Priority: 31.12.2025 CN 202522844482 U
(71) Applicant: Shining 3D Tech Co., Ltd., Hangzhou, Zhejiang 311258 (CN)
(72) Inventor: TAALAB, Elias, Hangzhou, 311258 (CN); QIAN, Huili, Hangzhou, 311258 (CN); WU, Jun, Hangzhou, 311258 (CN); WU, Siyuan, Hangzhou, 311258 (CN)
(74) Representative: Dai, Simin

(57) **Abstract**

The present application provides a container assembly (100), a printing device and a printing system (10). The container assembly (100) includes an accommodating chamber and an opening (114) in communication with the accommodating chamber. The container assembly (100) includes a light-transmitting assembly (20) provided at one end of the accommodating chamber and configured to allow light to pass through and thus enter the accommodating chamber. The container assembly includes a package structure (129) encapsulate the opening (114).

## Description

### TECHNICAL FIELD

The present application relates to the field of 3D printing technology, and in particular to a container assembly, a printing device and a printing system.

### BACKGROUND

A forming process of stereolithography 3D printing is as follows: a build platform is submerged into a liquid photosensitive resin, and an ultraviolet light source (such as a laser or projector) selectively irradiates a resin vat according to a sliced pattern of a model, causing the resin in specific areas to cure and adhere to the build platform. The platform then lifts to allow new resin to flow in. Layer by layer, a three-dimensional object "grows" from the liquid surface. Main components of a printing device include the resin vat that holds the printing material, a UV light source system (laser or projector) that generates the light, the build platform that performs the motion, and a control system that coordinates everything.

Current stereolithography 3D printing devices are typically equipped with an open-top, rectangular resin vat. The length and width of the vat can range from tens to hundreds of centimeters, with different machine specifications suitable for printing parts of various sizes. During printing, the resin is poured into the vat. However, this design has a drawback: for different print objects, an operator must manually estimate the required resin volume. Overestimation leads to material waste, while underestimation results in print failure.

### SUMMARY

In one aspect, disclosed herein is a container assembly. The container assembly is formed with an accommodating chamber and an opening communicating with the accommodating chamber; the container assembly includes a light-transmitting assembly arranged on one end of the accommodating chamber and configured to allow light to pass through and thus enter the accommodating chamber, and the container assembly further includes a packaging structure for sealing the opening.

In another aspect, disclosed herein is a printing system, including an optical engine configured to emit light for curing; and a container assembly, where the container assembly includes an outer cylinder and a platform assembly, and the platform assembly is longitudinally slidably disposed within a cavity of the outer cylinder. A receiving chamber for receiving a liquid printing material is formed inside the platform assembly. A fluid outlet communicating with the receiving chamber is provided at a bottom end of the platform assembly. A bottom end face of the platform assembly forms a build platform. A light-transmitting assembly is arranged at a bottom end of the outer cylinder, the light-transmitting assembly being configured to allow light emitted by the optical engine to pass therethrough and irradiate a region between the build platform and the light-transmitting assembly. The build platform, an inner wall of the outer cylinder, and the light-transmitting assembly collectively define a build chamber. When gas is injected into the receiving cavity, air pressure inside the receiving cavity increases, and the air pressure acts on the liquid printing material to drive the liquid printing material to flow through the fluid outlet into the build chamber.

The container assembly provided by the present application is formed with an accommodating chamber and an opening communicated with the accommodating chamber, and is equipped with a light-transmitting assembly and a packaging structure.

Compared with the limitations of traditional open resin tanks that rely on manual estimation of material injection volume and are incapable of driving high-viscosity materials, the container assembly achieves complete sealing of the accommodating chamber before printing through the arrangement of the packaging structure. It can strictly maintain the tightness of the chamber prior to printing to prevent leakage, oxidation or moisture contamination of printing materials. Meanwhile, it lays a foundation for stably establishing and controlling the internal pressure of the chamber during printing, thereby ensuring that high-viscosity printing materials can be extruded into the build chamber stably and controllably.

### BRIEF DESCRIPTION OF DRAWINGS

To illustrate more clearly the specific embodiments of the present application or the technical solutions in the prior art, a brief introduction is provided below to the drawings required for the description of the specific embodiments or the prior art. It is evident that the drawings described below represent some embodiments of the present application; however, a person skilled in the art may derive other drawings from these without requiring an inventive step.
FIG. 1 is a side view of the printing system according to an embodiment of the present application.
FIG. 2 is a schematic diagram of the container assembly of the printing system according to an embodiment of the present application.
FIG. 3 is an exploded view of the container assembly of the printing system p according to an embodiment of the present application.
FIG. 4 is a side view of the container assembly of the printing system prior to printing according to an embodiment of the present application.
FIG. 5 is a sectional view along line B-B in FIG. 4.
FIG. 6 is a side view of the container assembly of the printing system after printing according to an embodiment of the present application.
FIG. 7 is a sectional view along line C-C in FIG. 6.
FIG. 8 is a schematic diagram of the printing system according to an embodiment of the present application after printing.
FIG. 9 is a sectional view of the printing system according to an embodiment of the present application prior to printing.
FIG. 10 is a partial enlarged view of part M in FIG. 9.
FIG. 11 is a sectional view of the printing system according to an embodiment of the present application after printing.
FIG. 12 is a schematic diagram of the positioning assembly of the printing system according to an embodiment of the present application when clamping.
FIG. 13 is a schematic diagram of the positioning assembly of the printing system according to an embodiment of the present application after release of clamping.
FIG. 14 is a schematic diagram of the mounting platform of the positioning assembly of the printing system according to an embodiment of the present application.
FIG. 15 is a sectional view of another platform assembly of the printing system according to an embodiment of the present application.
FIG. 16 is a schematic diagram of another embodiment of a container assembly of the printing system according to an embodiment of the present application prior to printing.
FIG. 17 is an exploded view of the container assembly shown in FIG. 16.
FIG. 18 is a schematic structural diagram of container assembly according to an embodiment of the present application.
FIG. 19 is a schematic diagram of a breaking structure of the printing device according to an embodiment of the present application.
FIG. 20 is a schematic diagram showing a gas injecting mechanism in connection with the container assembly according to an embodiment of the present application.

Numeral reference: 100 - container assembly; 110 - outer cylinder; 111 - light-transmitting film; 112 - lid; 113 - positioning protrusion; 114-opening; 120 - platform assembly; 121 - receiving chamber; 122 - fluid outlet; 123 - vent; 124 - inner cylinder body; 125 - cover body; 126-second sealing ring; 127-protrusion, 128-packaging portion, 129-packaging structure, 130-first sealing ring; 140-build chamber; 10 printing system;
200-positioning assembly; 210-mounting platform; 211-positioning recess; 220 - clamping portion; 20-light transmitting assembly;
300 - gas injecting mechanism; 310 - gas outlet connector; 320 - elastic sealing sleeve; 330 - limiting portion; 340 - insertion port; 350 - breaking structure; 30 build platform;
400 - limiting mechanism;
510 - top plate; 520 - bottom plate; 530 - connecting column.

### DETAILED DESCRIPTION

To make the objectives, technical solutions and advantages of the embodiments of the present application clearer, the technical solutions of the embodiments of the present application will be described clearly and completely below with reference to the accompanying drawings. It is evident that the embodiments described constitute only some, and not all, of the embodiments of the present application. Typically, the components of the embodiments of the present application described and illustrated in the accompanying drawings may be arranged and designed in various different configurations.

Consequently, the detailed description of the embodiments of the present application provided in the accompanying drawings is not intended to limit the scope of the present application as claimed, but merely illustrates selected embodiments of the present application. All other embodiments obtained by a person skilled in the art based on the embodiments of the present application without the need for inventive labour fall within the scope of protection of the present application.

It should be noted that similar reference numerals and letters in the accompanying drawings denote similar elements; therefore, once an element has been defined in one drawing, it need not be further defined or explained in subsequent drawings.

In the description of the present application, it should be noted that terms such as "centre", "upper", "lower", "left", "right", "vertical", "horizontal", "inner", "outer" and the like indicate orientation or positional relationships based on the orientation or positional relationships shown in the drawings, or the orientation or positional relationships in which the product of the present application is customarily placed when in use. These terms are used solely for the convenience of describing the present application and to simplify the description, and are not intended to indicate or imply that the devices or elements referred to must have a specific orientation, be constructed in a specific orientation, or operate in a specific orientation; therefore, they must not be construed as limiting the scope of the present application. Furthermore, terms such as "first", "second" and "third" are used solely for the purpose of distinguishing between elements in the description and should not be construed as indicating or implying relative importance.

Moreover, terms such as "horizontal" and "vertical" do not require components to be absolutely horizontal or vertical, but may be slightly inclined. For example, "horizontal" merely refers to a direction that is more horizontal relative to "vertical"; it does not mean that the structure must be completely horizontal, but may be slightly inclined.

It should also be noted in the description of the present application that, unless otherwise explicitly stipulated or limited, the terms "arranged", "mounted", "connected" and "coupled" should be interpreted broadly. For example, they may refer to a fixed connection, a detachable connection or an integral connection; they may refer to a mechanical connection or an electrical connection; they may refer to a direct connection or an indirect connection via an intermediate medium; or they may refer to internal communication between two components. A person skilled in the art will be able to understand the specific meaning of the above terms in the context of the present application based on the specific circumstances.

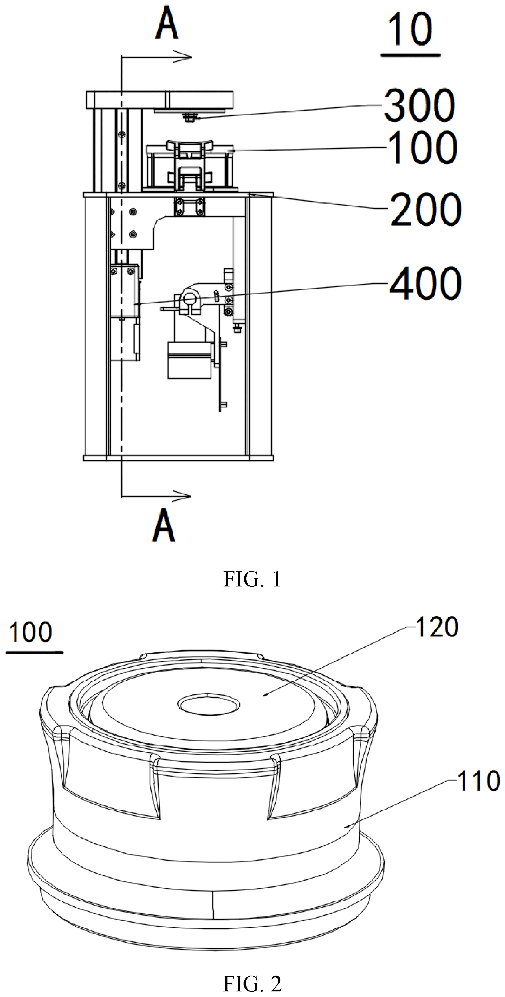

As shown in FIG. 1, a container assembly 100 provided by the present application is applicable for use in a 3D printing system. The printing system 10 further includes a positioning assembly 200, a gas injecting mechanism 300 and a limiting mechanism 400.

As shown in Fig. 2, the container assembly 100 includes an outer cylinder 110 and a platform assembly 120.

In this embodiment, the outer cylinder 110 is generally cylindrical in shape. In other embodiments, the outer cylinder 110 may be configured as a tubular member having an elliptical, rectangular, or other polygonal cross-section.

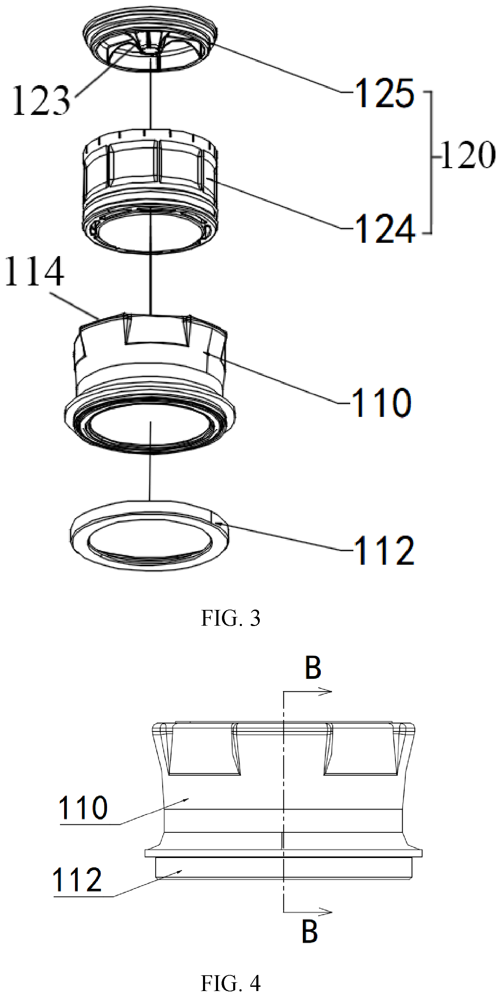

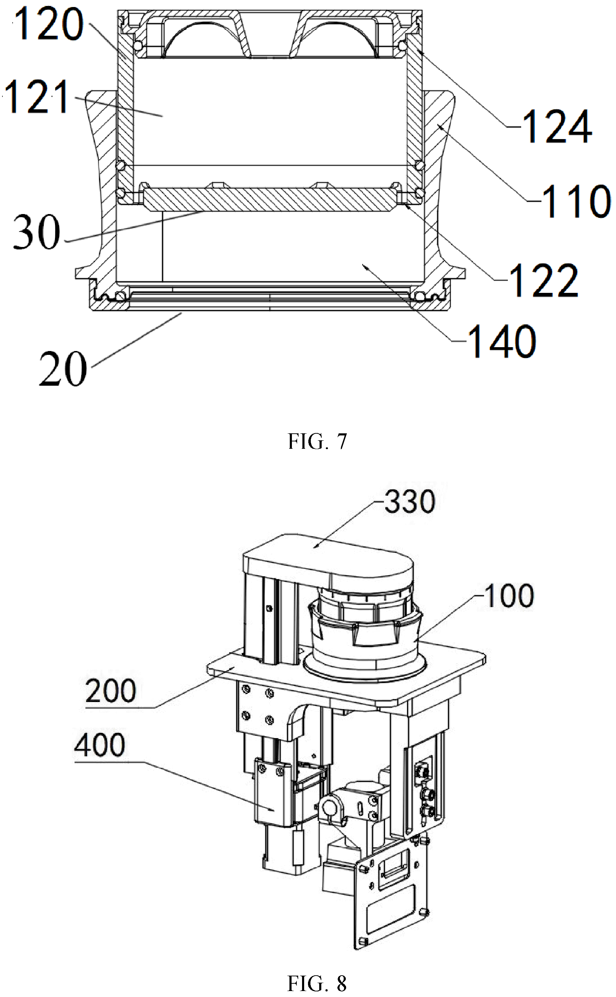

As shown in FIGS. 3, 6 and 7, in this embodiment, a first direction is vertical. A top end of the outer cylinder 110 may have an opening, and a light-transmitting assembly 20 is provided at the bottom of the outer cylinder 110. The platform assembly 120 enters the outer cylinder 110 through the opening at the top and is slidably and sealingly connected to the inner wall of the outer cylinder 110. Referring to FIG. 7, a bottom surface of the platform assembly 120 forms a build platform 30, and the space between the build platform 30 and the light-transmitting assembly 20 forms a build chamber 140. When the build platform 30 moves relative to the light-transmitting assembly 20 to a position in which the build platform 30 does not contact the light-transmitting assembly 20, the space within the cavity of the outer cylinder 110 and between the build platform 30 and the light-transmitting assembly 20 forms the build chamber 140. A size of the build chamber 140 varies with the movement of the build platform 30.

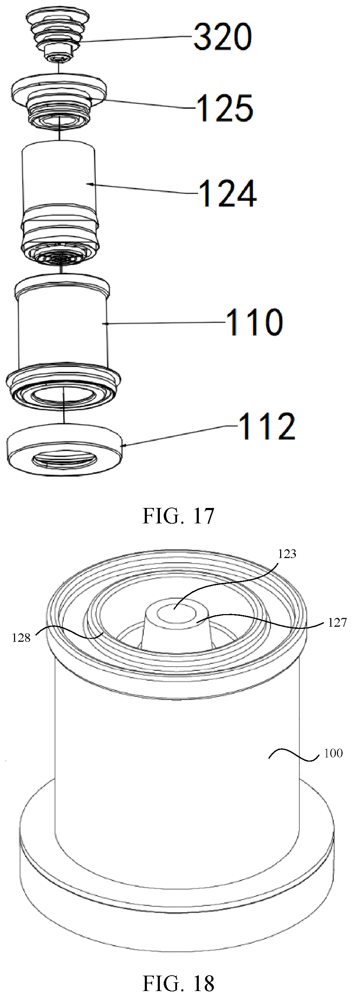

In an embodiment, referring to FIG. 18, a vent 123 may be provided at the opening of the outer cylinder. A protruding portion 127 of the platform assembly 120 extends outward from the main body of the platform assembly 120 to reach and form part of the opening of the outer cylinder 110, or the end face of the protruding portion 127 directly forms the opening where the vent 123 is arranged. The opening of the outer cylinder 110 serves not only as an access for accommodating or mating other components, but also as a passage for the ventilation function of the system.

When the vent 123 is located at the opening of the outer cylinder 110, a packaging structure 129 mounted thereon is directly exposed to external environment. The packaging structure 129 covers and seals the vent 123 at the opening area, which can effectively prevent contaminants from invading the interior of the outer cylinder 110 through the opening during storage and transportation, and also stop internal substances (such as residual resin or volatile components) from escaping outward via the opening. In this case, the packaging structure is generally arranged on the outer or inner end face of the opening to realize flat sealing or embedded sealing of the opening end face.

In this embodiment, the container assembly 100 may comprise an outer cylinder having an accommodating chamber and an opening 114 communicating with the accommodating chamber. The container assembly 100 may include a light-transmitting assembly 20 arranged on one end of the accommodating chamber and configured to allow light to penetrate into the accommodating chamber, and may further include a packaging structure for sealing the opening. Printing materials may be preloaded in the accommodating chamber.

The packaging structure can form a sealed chamber at the interface of the container assembly 100. One of functions of packaging structure is to seal the inlet and outlet of the main flow channel for printing materials, so as to hermetically confine the printing materials within a predetermined accommodating space and avoid leakage, volatilization or contamination of the printing materials under non-operating conditions.

Meanwhile, the packaging structure can seal the inlet and outlet of gas channels such as the vent 123. Sealing the vent 123 can isolate external air to prevent oxidation or deterioration of printing materials caused by oxygen contact, and can also maintain a certain inert gas atmosphere or vacuum degree inside the cavity, further improving the storage stability of materials.

In an embodiment, the packaging structure may further encapsulate the entire platform assembly 120 inside the outer cylinder 110. Such a packaging structure can seal the opening on the outer cylinder 110 for mounting, dismounting or sliding the platform assembly 120. In this way, the platform assembly 120 is fully accommodated and fixed inside the accommodating chamber defined by the outer cylinder 110 during transportation and storage, avoiding displacement or damage of the platform assembly 120 due to accidental impact and vibration, as well as contact contamination with external objects.

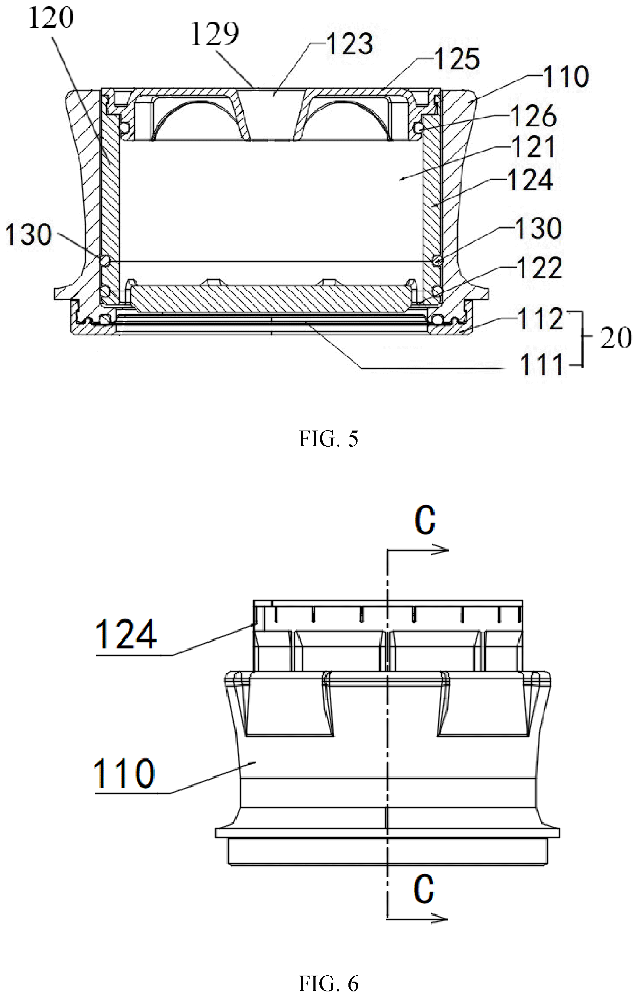

As shown in FIG. 5, in this embodiment, the interior of the platform assembly 120 includes a receiving chamber 121, which is used to receive the printing material. The printing material may be a resin material, such as a photopolymer resin.

As shown in FIG. 7, the receiving chamber 121 communicates with the build chamber 140, allowing the printing material to flow between the receiving chamber 121 and the build chamber 140. When the build platform moves into a position where it abuts the light-transmitting assembly, the printing material is essentially located within the receiving chamber 121. When the build platform moves away from the light-transmitting assembly, the printing material flows from the receiving chamber 121 into the build chamber 140. When the build platform moves towards the light-transmitting assembly, the printing material flows from the build chamber 140 into the receiving chamber 121.

As shown in FIG. 5, in this embodiment, the platform assembly 120 is further provided with a vent 123 communicating with the receiving chamber 121. The vent 123 allows the air pressure within the receiving chamber 121 to be controlled. For example, air pressure in the receiving chamber 121 can be increased by injecting gas into the sealed receiving chamber 121. When the air pressure in the receiving chamber 121 exceeds the external atmospheric pressure, the platform assembly 120 moves upwards (i.e. moves away from the light-transmitting assembly). In another condition, the sealed receiving chamber 121 may be depressurized with the vent. When the air pressure in the receiving chamber 121 is lower than the external atmospheric pressure, the platform assembly 120 moves downwards (i.e. moves towards the light-transmitting assembly).

In one embodiment, the vent 123 is located above the liquid level of the printing material. The vent 123 is situated on the top of the platform assembly 120.Alternatively, it may be situated above a liquid level limit of the platform assembly 120, where the liquid level limit is not higher than a maximum liquid level at which the platform assembly 120 can accommodate the printing material.

In other embodiments, the vent 123 may also be positioned elsewhere, provided that it is ensured that gas can be introduced into the receiving chamber.

As shown in FIG. 18, in the embodiment, a cavity of the outer cylinder 110 may be the accommodating chamber. One end of the outer cylinder is provided with an opening communicating with the accommodating chamber, and a light-transmitting assembly is arranged on the opposite end of the outer cylinder 110 relative to the opening. The opening allows the platform assembly 120 to move into and out of the accommodating chamber. A packaging structure mates with the outer cylinder 110 to encapsulate printing material and/or the platform assembly inside the outer cylinder 110.

The outer cylinder 110 refers to a structure with a cavity. The cavity may be a cylindrical with a round cross section, a square cross section or other appropriate geometrical form. Its primary function is to form a sealed or sealable physical space that may be configured to preload printing materials, namely the accommodating chamber, and provide a fixed structural boundary and an optical window for the printing process.

An opening is formed on one end of the outer cylinder 110, which acts as a main passage connecting the cavity of the outer cylinder to the external environment. It enables the platform assembly 120 to enter or exit the cavity of the outer cylinder through the opening, so as to realize positioning and lifting of the build platform during printing, or serve as an access for maintenance and replacement.

A light-transmitting assembly is disposed on the other end of the outer cylinder 110 opposite to the opening, i.e., the bottom or end face of the outer cylinder 110. The light-transmitting assembly is an optical component that permits penetration of light radiation at specific wavelengths. Its core function is to allow forming light beams emitted by an external optical machine to pass through with zero or low loss into the accommodating chamber during printing, so as to irradiate the printing material inside the cavity and trigger curing reactions thereof.

Referring to FIG. 2, the container assembly 100 may include the outer cylinder 110 and the platform assembly 120. The platform assembly 120 is slidably connected inside the cavity of the outer cylinder 110. The platform assembly 120 is dynamically sealed and mated with the outer cylinder, and a build chamber is created inside the cavity of the outer cylinder. The build chamber is located between the platform assembly 120 and the light-transmitting assembly. The accommodating chamber encompasses the build chamber. The opening includes a vent 123 communicating with the accommodating chamber, and the packaging structure seals the vent.

The platform assembly 120 can move along the axial direction of the cavity of the outer cylinder or a preset guiding direction, so that it can move into and out of the accommodating chamber during printing or displace during forming. The slidable connection provides a stable and controllable movement path for the platform assembly 120.

Being dynamically sealed means that the mating interface between the platform assembly 120 and the outer cylinder 110 can maintain an effective sealed state at all times while the platform assembly 120 slides relative to the outer cylinder 110. Such sealing prevents leakage of the printing material in the accommodating chamber through a gap between the platform assembly 120 and the inner wall of the outer cylinder 110. Meanwhile, it can maintain the pressure environment inside the cavity when required and isolate external contaminants.

The platform assembly 120 may include an inner cylinder. A build platform may be arranged on the end of the inner cylinder facing the light-transmitting assembly 20. The cavity of the inner cylinder communicates with the build chamber, and the accommodating chamber includes the cavity of the inner cylinder. The vent is disposed at the top of the platform assembly 120.

The build platform may be provided with a flow port for communicating the cavity of the inner cylinder with the build chamber.

The flow port provides a fluid communication channel between the cavity of the inner cylinder and the accommodating chamber formed by the outer cylinder 110, which allows printing materials to flow between the cavities/chambers.

During the printing process, as the build platform ascends or by other means, the printing material may be supplemented from the accommodating chamber to the area adjacent to the build platform through the flow port, ensuring sufficient material supply for each layer of cured material.

In summary, the accommodating chamber refers to the main internal space defined by the inner wall of the outer cylinder 110. Its core function serves as an accommodating space to house the platform assembly (including its inner cylinder, build platform and other components), and provides an overall storage environment for the printing materials.

Inside the accommodating chamber, the inner cylinder of the platform assembly 120 forms an internal space, namely the inner cylinder chamber (or receiving chamber), which is a constituent part of the platform assembly. The inner cylinder chamber can store the printing material, and particularly acts as a direct supply source or pressure buffer zone for printing material. Preloaded liquid printing material is mainly stored within the inner cylinder chamber.

The build chamber is a functional space that is dynamic. During printing, when the build platform moves to a position close to the light-transmitting assembly, an extremely thin gap layer is formed between the surface of the build platform and the light-transmitting assembly, and this gap is the build cavity (or the build chamber) where photocuring reactions actually take place. Printing material stored in the inner cylinder cavity flow into the build chamber via the flow ports arranged on the build platform under conveying or pressure.

The outer cylinder 110 may be provided with a vent 123, which can be arranged as an opening, and a packaging structure may be fitted on the vent 123. The packaging structure can seal the outer cylinder 110 to encapsulate the printing material and the platform assembly inside the outer cylinder. The packaging structure is configured to close the vent, preventing external contamination or escape of internal substances through the vent under non-working conditions. The adoption of the packaging structure keeps the internal environment of the container assembly clean and stable during storage and transportation, and the packaging structure can be removed when the user intends to use the assembly.

Alternatively or additionally, the platform assembly 120 may be equipped with an inner cylinder. The inner cylinder is provided with a vent 123, and a packaging structure may be arranged on the vent.

Referring to FIG. 18, in an embodiment, the platform assembly 120 may be provided with a protruding portion 127, and the vent 123 may be formed on the end face of the protruding portion 127. Along the protruding direction, the cross-sectional area of the protruding portion 127 may gradually decrease to form a flow-guiding or easily mating configuration. This tapered geometric profile helps guide airflow and provides a concentrated force-bearing surface for packaging operations.

At least part of the packaging structure may cover the vent 123. The packaging structure may be provided with a tear-off section. By operating the tear-off section, a user can completely or partially break and thus remove the packaging structure without extra tools, thereby exposing the vent and restoring its ventilation function.

The packaging structure may be disposed on the outer side of the vent 123, covering and fitting tightly against the end face of the protruding portion 127 from outside to form a seal for the vent. This arrangement facilitates packaging operations during manufacturing and improves production efficiency.

When arranged on the outer side, the packaging structure acts as a protective barrier isolating the external environment, effectively blocking contaminants such as dust and impurities from entering the interior of the platform assembly via the vent.

The packaging structure may alternatively be arranged on the inner side of the vent 123, i.e., sealing the vent from the interior of the cavity. This configuration avoids direct scraping or impact on the sealing surface from external components, helps maintain the integrity of the packaging structure, and delivers a flatter outer contour of the component.

The packaging structure may be sheet-shaped to implement flexible sealing of the vent 123. The sheet-shaped packaging structure can fit closely against the surface of the vent 123. Its flexible property enables flexible sealing to adapt to uneven packaging surfaces and guarantee full sealing performance. Meanwhile, it features a certain deformation capacity under external force to preserve packaging integrity.

The packaging structure may adopt a tearable pull-off structure. The material of the packaging structure itself or prefabricated tear lines on the packaging structure can deliver low tear strength, allowing a user to tear off or remove the packaging structure by applying moderate pulling force.

And/or, the packaging structure may be a one-time disposable sealing structure.

The packaging structure may include an aluminum foil layer and/or a heat-shrinkable film. The barrier performance of the aluminum foil layer can effectively isolate gas and moisture to achieve high-strength sealing of the vent; the heat-shrinkable film can be sleeved outside the protruding portion 127 before heating, and undergoes uniform shrinkage upon heating to tightly wrap the outer surface of the protruding portion 127 and form a tight encapsulation. The packaging structure can be configured as a single-layer or multi-layer structure. Single-layer packaging structures feature low cost and simple processes, while multi-layer packaging structures integrate the advantages of different materials to satisfy multiple requirements including sealing strength, barrier performance and easy opening.

The packaging structure may be constructed as a multi-layer structure with sequentially stacked packaging layers. The multi-layer packaging structure may include different types of packaging layers. By way of example, the layers may be one or more aluminum foil layers and one or more heat-shrinkable films arranged in sequence.

The platform assembly 120 may be provided with a plurality of packaging portions 128. The multiple packaging portions 128 may be circumferentially arranged around the periphery of the vent 123, and at least part of the packaging structure is connected with the packaging portions 128. The packaging portions 128 are distributed circumferentially around the vent 123, and at least one layer of the packaging structure can be firmly bonded to one or more packaging portions 128 through processes such as hot melting, adhesive bonding or pressing.

The packaging structure may include an aluminum foil layer and/or a heat-shrinkable film. The aluminum foil layer realizes high-strength sealing by virtue of its excellent barrier properties, and the heat-shrinkable film tightly wraps the exterior of the protruding portion 127 relying on its thermal shrinkage characteristic.

And/or, the packaging structure may include a cap assembly, and the platform assembly 120 may be provided with connecting portions. The cap assembly may be fixed to the platform assembly 120 via the connecting portions. The cap assembly forms a detachable or permanent connection with the platform assembly 120 through the connecting portions to realize mechanical capping protection of the vent.

The packaging structure of the present application can be adaptively matched with various types of container assemblies to achieve effective sealing and protection of the printing material and internal components.

For a container assembly composed of a single outer cylinder 110 and a single inner cylinder, printing materials are preloaded inside the inner cylinder. The packaging structure is mainly arranged at the vent 123 or feed port on the top of the inner cylinder, which seals the inner cylinder cavity into an independent material storage unit. Meanwhile, to guarantee the integrity of the capsule, the packaging structure may also extend to the opening of the outer cylinder 110, so as to fully encapsulate the entire inner cylinder inside the cavity of the outer cylinder 110. In this way, the packaging of the inner cylinder maintains the stability of the printing materials, while the packaging of the outer cylinder 110 provides additional physical protection, and the two together form double-layer protection.

For a container assembly consisting of only one single outer cylinder 110, printing materials are preloaded directly in the main accommodating cavity formed by the outer cylinder 110 without an independent inner cylinder. Under such circumstances, the packaging structure serves to directly seal the opening on the outer cylinder 110 that communicates with the accommodating cavity. This opening may simultaneously act as a feed port for printing materials, a material flow port during forming, and a potential gas exchange port. The packaging structure shall firmly cover and seal this opening to fully enclose the printing materials inside the outer cylinder 110 and avoid leakage and contamination.

For a container assembly including a single outer cylinder 110 and merely a build platform, the build platform is not provided with an independent inner cylinder cavity, and printing materials are stored directly in the cavity of the outer cylinder 110. Two matching configurations are available here. The first configuration adopts a sealed fit between the build platform and the outer cylinder 110. In this case, the build platform itself or its peripheral structures form a dynamic or static seal with the inner wall of the outer cylinder 110, partitioning the cavity of the outer cylinder 110 into separate upper/lower or inner/outer zones. The primary function of the packaging structure is to seal the flow ports on the platform, independent openings on the outer cylinder 110, or assembly gaps between the platform and the outer cylinder 110, so as to ensure the tightness of the material storage area.

The second configuration adopts an unsealed fit between the platform assembly 120 and the outer cylinder 110. Under this condition, printing materials can flow relatively freely throughout the entire cavity of the outer cylinder 110. The core function of the packaging structure is to fully seal the opening of the outer cylinder 110, ensuring the whole cavity as well as the internal platform assembly 120 and printing materials are encapsulated as an integral unit to prevent any leakage.

For a container assembly with two interconnected outer cylinders 110, one outer cylinder 110 is equipped with a build platform for photocuring forming, which can be referred to as a forming outer cylinder 110. The other outer cylinder 110 is mainly used to store printing materials or serve as a functional module (such as a gas supply chamber), which can be referred to as a material storage outer cylinder 110 or a functional outer cylinder 110. The two outer cylinders 110 are in fluid communication via pipelines or direct through holes. In this structure, packaging structures may be respectively arranged at the openings of the two outer cylinders 110 to maintain internal cleanliness of each cylinder during transportation and storage. The packaging structure shall reliably seal the connecting pipelines or interfaces linking the two outer cylinders 110, preventing accidental cross-cylinder flow or leakage of printing materials under non-working conditions. For a functional outer cylinder 110 for gas supply, its packaging structure shall further maintain the internal gas pressure or specific gas composition.

As shown in FIGS. 5 and 7, during printing, introducing gas through the vent 123 increases the pressure within the receiving chamber 121 to cause the printing material within the receiving chamber 121 to be pressed into an area between the bottom of the platform assembly 120 and the light-transmitting assembly. The printing material pushes the platform assembly 120 to move outwards relative to the outer cylinder 110 (i.e. piston motion). The build chamber 140 is formed between the bottom surface of the platform assembly 120 and the light-transmitting assembly. Light is projected through the light-transmitting assembly onto a build surface (during a first print, the bottom surface of the build platform serves as the build surface), causing the printing material within the build chamber 140 to be cured. By controlling the air pressure to cause the platform assembly 120 to move outwards layer by layer, layer-by-layer printing is achieved, resulting in the formation of the printed object. By injecting gas, transfer of the printing material from the receiving chamber 121 to the build chamber 140 is realized. Under the influence of air pressure, the printing material flows rapidly, resolving a problem of slow printing or even failure in printing caused by the sluggish flow of high-viscosity printing material. This overcomes the printing limitations of high-viscosity resin materials, allowing the printing material to flow smoothly and level out, thereby achieving efficient printing.

In this embodiment, the platform assembly 120 includes an inner cylinder, the cavity of which forms the receiving chamber 121. The outer cylinder 110 is plug-fit engaged with the inner cylinder. The cavity of the outer cylinder 110 communicates with the cavity of the inner cylinder; and the inner cylinder is provided with the vent 123.

The shape and dimensions of the inner cylinder are matched to those of the outer cylinder 110 to achieve a sliding seal after insertion. The bottom of the inner cylinder (the build platform) is provided with a fluid outlet 122 to ensure communication between the cavity/chamber of the outer cylinder 110 and the cavity/chamber of the inner cylinder. To avoid structural interference, the vent 123 may be positioned at the top of the inner cylinder. In some embodiment, the flow port comprises the fluid outlet 122.

To prevent air or fluid leakage from the build chamber 140, the inner wall of the outer cylinder 110 forms a sealing fit with the outer wall of the inner cylinder.

In one embodiment capable of achieving sealing, as shown in FIG. 5, at least one first sealing ring 130 is provided on the outer wall of the inner cylinder. The first sealing ring 130 may be fixedly connected to the inner cylinder by means of an adhesive. The first sealing ring 130 is elastic and may be made of rubber. The first sealing ring 130 abuts against the inner wall of the outer cylinder 110 and deforms, filling the gap between the inner cylinder and the outer cylinder 110 to achieve sealing. In this embodiment, two first sealing rings 130 are provided, arranged along the direction of insertion of the inner cylinder into the outer cylinder 110. In other feasible embodiments, there may be one, three, four or more first sealing rings 130. It should also be noted that the first sealing ring 130 may also be positioned on the inner wall of the outer cylinder 110. As shown in FIG. 7, the inner cylinder is located inside the outer cylinder 110, and a fluid outlet 122, which communicates the build chamber 140 and the receiving chamber 121, is provided at the end of the inner cylinder facing the light-transmitting assembly (i.e. the build platform).

The printing material extruded from the receiving chamber 121 may flow directly downwards into the build chamber 140 located beneath the inner cylinder, without having to turn, ensuring good fluid flowability. Furthermore, a plurality of fluid outlets 122 may be provided, with the fluid outlets 122 uniformly distributed around a build area of the build platform (i.e., the fluid outlets 122 are positioned to avoid the build area), thereby allowing the printing material to enter the build chamber 140 uniformly from different positions. During the printing process, the printing material flows uniformly around the printed object, replenishing the printing material needed for the printed object. In this embodiment, the various fluid outlets 122 are uniformly distributed along the edge of the build platform circumferentially.

As shown in FIG. 5, a cross-section of the vent 123 gradually decreases from the outside to the inside. In this embodiment, the vent 123 is inverted conical in shape.

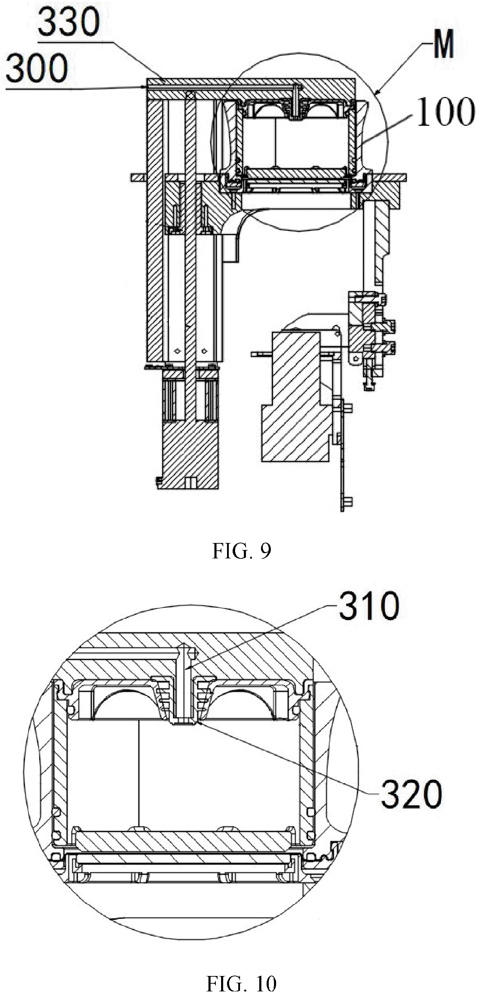

Referring to FIG. 10, when connecting to a gas outlet connector 310 of the gas injecting mechanism 300, the gas outlet connector 310 may be easily inserted into the vent 123. Furthermore, as the gas outlet connector 310 is being inserted, the inner wall of the tapered vent 123 gradually envelops the outer wall of the gas outlet connector 310, thereby enhancing the seal between the vent 123 and the connector.

As shown in FIG. 3, a feed port is provided on the inner cylinder, through which printing material can be added to the interior of the inner cylinder. In this embodiment, the vent 123 forms the feed port; that is, the vent 123 and the feed port are a single opening structure. The vent 123 is detachably connected to a sealing cover
In other embodiments, the vent 123 and the feed port are two separate openings. In this configuration, once the feeding task has completed, the feed port is to be sealed using a stopper or a similar structure.

As shown in FIGS. 3 to 5, the inner cylinder includes an inner cylinder body 124 and a cover 125, with the feed port provided on the inner cylinder body 124. The cover 125 is provided with the vent 123. The cover 125 is connected to the feed port and serves to seal the feed port.

The top of the inner cylinder body 124 is an open structure to form the feed port. After feeding of printing material is complete, the cover 125 is connected to the inner cylinder body 124 to seal the open structure.

As shown in FIGS. 5 and 6, to enhance sealing performance, at least one second sealing ring 126 is provided between the cover 125 and the inner cylinder body 124. The second sealing ring 126 may be fixed to the cover 125 or to the inner cylinder body 124. The second sealing ring 126 is elastic and may be made of rubber. The second sealing ring 126 deforms upon compression, filling the gap between the cover 125 and the inner cylinder body 124 to achieve a seal.

As shown in FIGS. 5 and 7, the light-transmitting assembly 20 includes a lid 112 and a light-transmitting film 111. The lid 112 is connected to the bottom end of the outer cylinder 110, and the light-transmitting film 111 is clamped and secured between the lid 112 and the outer cylinder 110.

The bottom of the outer cylinder 110 is open. The lid 112 can be connected to the outer cylinder 110 in a snap-fit manner. The light-transmitting film 111 is clamped between the lid 112 and the outer cylinder 110; and the lid 112 and the light-transmitting film 111 seal the open bottom of the outer cylinder 110. Clamping the light-transmitting film 111 simultaneously with the engagement of the lid 112 and the outer cylinder 110 facilitates the assembly and tensioning of the light-transmitting film 111, whilst sealing the open bottom of the outer cylinder 110. The lid 112 is provided with a hollow structure corresponding to the opening. The light-transmitting film 111 may include one or more layers. In one embodiment, the light-transmitting film 111 includes a release film; in another embodiment, the light-transmitting film 111 includes a release film and a light-diffusing film.

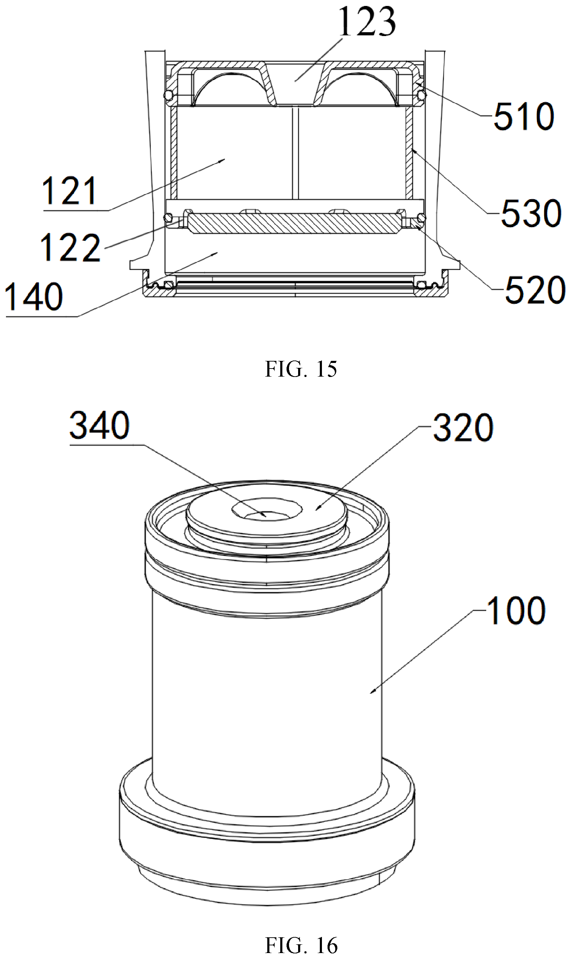

As shown in FIG. 15, in another embodiment, the platform assembly 120 may not be cylindrical in shape. The platform assembly 120 includes a top plate 510 (with a function similar to the cover 125) and a bottom plate 520 (with a function similar to the light-transmitting assembly), which are spaced apart vertically. The bottom plate 520 forms a build platform. The vent 123 is provided in the top plate 510. The fluid outlet 122 is provided in the bottom plate 520. The top plate 510 and the bottom plate 520 are connected by a plurality of vertical connecting columns 530. The circumferential edges of both the top plate 510 and the bottom plate 520 are in sliding seal with the outer cylinder 110. The top plate 510, the bottom plate 520 and the outer cylinder 110 enclose the receiving chamber 121. In this embodiment, only the external configuration of the platform assembly 120 has changed; all other structures are identical to those of the platform assembly 120 in the aforementioned embodiments.

In one possible embodiment, as shown in FIGS. 16 and 17, the container assembly 100 may further include an elastic sealing sleeve 320. The elastic sealing sleeve 320 is inserted into the vent 123, with its outer wall abutting the inner wall of the vent 123 to form a seal. An insertion port 340 extending in the vertical direction is provided at the centre of the elastic sealing sleeve 320. The insertion port 340 communicates the external environment and the receiving chamber 121, and is configured to be connected to the gas outlet connector 310 of the gas injecting mechanism 300. The gas outlet connector 310 of the gas injecting mechanism 300 is inserted into the insertion port 340 to inject gas into the receiving chamber 121. In this embodiment, the elastic sealing sleeve 320 forms a part of the container assembly 100 and is disposable.

In other feasible embodiments, the elastic sealing sleeve 320 may also form part of the gas injecting mechanism 300; which will be discussed in detail when describing the printing device below and will not be elaborated upon here. Furthermore, the detailed structure of the elastic sealing sleeve 320 will be described below.

The container assembly in this embodiment is used for printing small-sized objects, such as teeth. Consequently, the build surface is small. The side of the platform assembly 120 facing the light-transmitting assembly 20 may be circular, square or even irregular in shape. When the side is circular, its diameter is less than or equal to 75 mm. When the side is rectangular, its side length is less than or equal to 75 mm. Furthermore, when the side is of an irregular shape, it includes at least one complete circular region, the diameter of which is less than or equal to 75 mm. Furthermore, to facilitate processing, the diameter of the circular region is greater than or equal to 10 mm.

A capsule containing printing material provided by the present application includes the above-mentioned container assembly. A receiving chamber of the container assembly accommodates printing material and the printing material may be resin.

The capsule containing printing material provided by the present application includes a light-shielding structure and the aforementioned container assembly. The light-shielding structure is connected to the container assembly, and the light-shielding structure shields the light-transmitting assembly to prevent external light from entering the receiving chamber through the light-transmitting assembly.

In one embodiment, the light-shielding structure includes a light-shielding cover, which is connected to the end of the container assembly provided with the light-transmitting assembly via a plug-in or threaded connection, thereby enclosing the light-transmitting assembly of the container assembly.

In another embodiment, the light-shielding structure includes a housing that may be opened and closed. The interior of the housing is provided with positioning slots. There may be multiple such slots to accommodate multiple container assemblies. The end of a container assembly containing the light-transmitting assembly is inserted into the positioning slot. On one hand, the bottom of the positioning slot seals the light-transmitting assembly, and on the other hand, once the housing is closed, the entire interior of the housing is kept in darkness, further preventing light from entering the container assemblies.

As shown in FIG. 8, a printing device provided by the present application includes the aforementioned container assembly 100. The specific structure of the container assembly 100 may refer to the aforementioned container assembly 100 and will not be repeated in detail here.

The container assembly 100 is detachably mounted on a 3D printer. As an implementation, the container assembly 100 may be a disposable item. When printing is to be performed, the container assembly 100 is fitted to the 3D printer for printing, and is discarded upon completion of the printing. For the next print, a different container assembly 100 is fitted for printing. In one embodiment, the container assembly 100 is pre-filled with printing material, such as printing resin; alternatively, printing resin may be injected into the container assembly 100 prior to printing.

As shown in FIGS. 8 to 10, the printing device further includes a limiting mechanism 400 and a gas injecting mechanism 300, where a gas outlet of the gas injecting mechanism 300 is connected to the vent 123 of the container assembly 100. The limiting mechanism 400 includes a limiting portion 330 capable of moving in a first direction, which is used to limit the movement distance of the platform assembly 120 in the first direction.

As shown in FIGS. 9 to 11, prior to printing, the gas injecting mechanism 300 is connected to the container assembly 100 to inject gas into the container assembly 100. During the printing process, to control the travel distance of the platform assembly 120, the limiting portion 330 of the limiting mechanism 400 is connected to the platform assembly 120. It should be noted that the limiting portion 330 may be directly connected to the platform assembly 120; alternatively, an abutting relationship may be formed between the limiting portion 330 and the platform assembly 120, that is, during the ascent of the platform assembly 120, the limiting portion 330 acts as a stopper. When the limiting portion 330 is in contact with the platform assembly 120, the platform assembly 120 cannot move upwards. After the limiting portion 330 moves a distance L in the first direction, the platform assembly 120 moves upwards a distance L under pneumatic drive. In this embodiment, the limiting portion 330 may be configured to rise at a fixed speed; correspondingly, under the limitation of the limiting portion 330, the platform assembly 120 will move vertically upwards at approximately the same speed. The limiting portion 330 moves layer by layer, and the platform assembly 120 moves layer by layer, thereby achieving layer-by-layer printing to form the printed object. Print failure caused by the platform assembly 120 failing to travel a specified distance due to excessively high or low air pressure can be avoided.

The gas injecting mechanism 300 is connected to the limiting portion 330. The limiting portion 330 drives the gas injecting mechanism 300 to move towards or away from the vent 123, so that the gas outlet and the vent 123 are docked or decoupled.

In other embodiments, the gas injecting mechanism 300 and the limiting portion 330 may be two separate components.

As shown in FIGS. 8 to 10, in this embodiment, to simplify the structure and enhance the degree of integration and automation, the gas injecting mechanism 300 and the limiting portion 330 are integrated onto a single component. The limiting portion 330 includes a cantilever that is capable of moving up and down. The gas injecting mechanism 300 is mounted on the cantilever, and the gas outlet of the gas injecting mechanism 300 is fixedly connected to the cantilever. Prior to printing, the cantilever moves to a position above the mounting location of the container assembly 100. The container assembly 100 is fitted into place, and the cantilever is then lowered so that the gas outlet of the gas injecting mechanism 300 aligns with the vent 123, whilst the cantilever presses against the top surface of the platform assembly 120 to limit position. During the printing process, along with the ascent of the cantilever, the platform assembly 120 also moves upwards under pressure of gas. The gas outlet of the gas injecting mechanism 300 remains in a sealed connection with the vent 123 throughout the cantilever's movement. The position of the platform assembly 120 is limited by the position of the cantilever. Layer by layer ascent of the cantilever limits the positions of the platform assembly 120 layer by layer, thereby achieving layer-by-layer printing of the 3D printer.

As shown in FIG. 10, the gas injecting mechanism 300 includes a gas outlet connector 310, the outlet of which forms a gas outlet. An elastic sealing sleeve 320 is fitted over the outer side of the gas outlet connector 310, and the elastic sealing sleeve 320 is used to form a sealed connection with the vent 123.

The gas outlet connector 310 is inserted into the interior of the vent 123. The elastic sealing sleeve 320 on the outer side of the gas outlet connector 310 can undergo compression deformation against the inner wall, filling the gap between them, thereby enhancing the seal and preventing gas leakage.

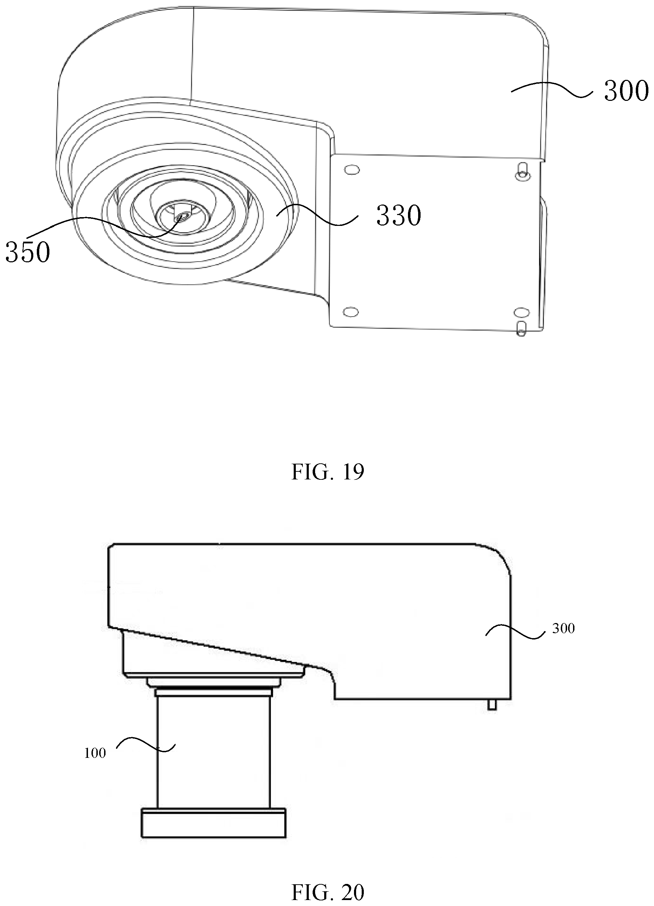

As shown in FIG. 19, the gas injecting mechanism 300 may be provided with a breaking structure 350 which is configured to break a packaging structure so that the gas outlet connector 310 of the gas injecting mechanism 300 communicates with the accommodating chamber of the container assembly 100.

By way of example, the breaking structure 350 may be provided as a piercing structure. The piercing structure may prick the packaging structure by a sharp portion.

When the packaging structure is to be pricked, the piercing structure may move towards the packaging structure and act on a partial region of the packaging structure with the sharp portion.

As shown in FIG. 20, when the packaging structure includes an aluminum foil layer, the sharp portion of the piercing structure first contacts a surface of the aluminum foil layer. Under continuous axial pressure, the sharp portion can pierce the aluminum foil possessing a relatively high strength and form a penetrating opening. If a heat-shrinkable film is coated on the outer side of the aluminum foil layer, the sharp portion acts on the heat-shrinkable film. Given that the heat-shrinkable film generally has certain ductility and low puncture strength, it can be torn or pierced by the sharp portion. After piercing the heat-shrinkable film, the sharp portion further pierces the aluminum foil layer, thereby completing the breaking of the entire composite packaging structure and finally exposing the vent 123. It should be noted that in this embodiment, the piercing structure is disposed on the gas outlet connector 310, that is, the gas outlet is arranged on the piercing structure, which realizes the communication between the gas outlet connector 310 of the gas injecting mechanism and the accommodating chamber of the container assembly 100 while breaking the packaging structure. Alternatively, the piercing structure and the gas outlet may be disposed separately, consequently, processes of breaking the packaging structure and connecting the gas outlet connector 310 with the accommodating chamber need to be operated respectively.

The printing device further includes a positioning assembly 200 for securing the container assembly 100 and an optical engine for serving as a light source.

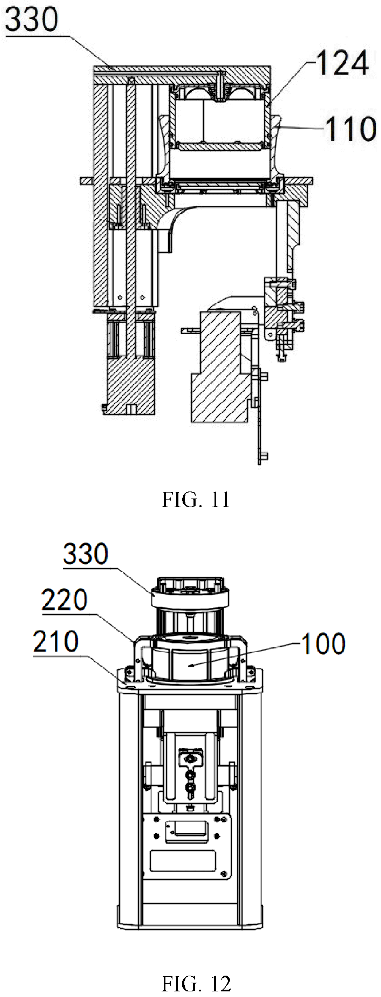

As shown in FIGS. 12 to 14, prior to printing, the container assembly 100 is to be mounted on the main body of the 3D printing device. The outer cylinder 110 is secured to ensure its correct orientation and to prevent it from shifting during the printing process, which could affect the shape of the printed object within the build chamber 140.

The positioning assembly 200 includes a mounting platform 210 and a clamping assembly. The mounting platform 210 is used to position and mount the container assembly 100, whilst the clamping assembly is used to clamp and secure the container assembly 100 to the mounting platform 210. The mounting platform 210 is mounted on the frame, and the clamping assembly is mounted on the mounting platform 210. The clamping assembly may alternatively be mounted on the frame, or mounted directly or indirectly on the mounting platform 210.

The mounting platform 210 provides a standard mounting position for the container assembly 100. Once the bottom of the container assembly 100 is mounted on the mounting platform 210, the vent 123 on the container assembly 100 is precisely aligned vertically with the gas outlet connector 310 on the limiting portion 330. The clamping assembly clamps the container assembly 100 to prevent it from wobbling.

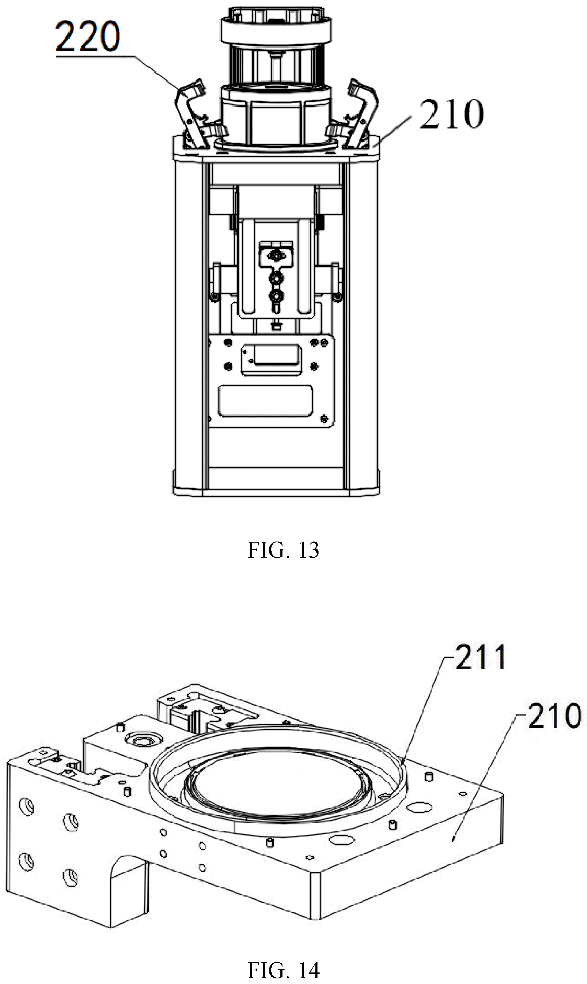

As shown in FIG. 14, a positioning recess 211 is provided on the mounting platform 210 to allow the bottom of the container assembly 100 to be positioned and mounted within the positioning recess 211.

The shape and dimensions of the positioning recess 211 correspond approximately to those of the outer cylinder 110, allowing the outer cylinder 110 to fit snugly within the positioning recess 211. The inner wall of the positioning recess 211 acts as a stop against the outer wall of the outer cylinder 110, thereby providing positioning.

As shown in FIGS. 12 and 13, the clamping assembly includes at least two clamping portions 220 arranged on the outer side of the container assembly 100 and surrounding the container assembly 100 to press against the positioning protrusion 113 at different positions.

The number of clamping portions 220 may be one, two or more. In this embodiment, there are two clamping portions 220, and the two clamping portions 220 are symmetrically arranged, thereby providing stable clamping for the container assembly 100 from both sides.

The clamping portion 220 may be rotatably connected to the mounting platform 210, or it may be linearly slidably connected to the mounting platform 210, thereby switching between an unlocked state and a locked state.

When the clamping assembly is in the unlocked state, the individual clamping portions 220 open to form an accommodating space avoiding the limiting portion 330, allowing the limiting portion 330 to be accommodated within the accommodating space.

As shown in FIG. 13, once printing is complete and the container assembly 100 has been removed, the individual clamping portions 220 can be unfolded. A central region surrounded by the unfolded clamping portions 220 can accommodate the lowered limiting portion 330, thereby allowing the printing device to be stored in a smaller volume, facilitating storage and transport.

The printing system provided by the present application includes a system main body/unit and the aforementioned container assembly 100. The specific structure of the container assembly 100 may refer to the aforementioned container assembly 100 and will not be repeated here. The container assembly 100 is a disposable item. After completing a single print, it is replaced with a new container assembly 100.

The system main unit may be the aforementioned printing device. For the specific structure of the printing device, please refer to the description of the printing device provided above, which will not be repeated in detail here. It may also be a main unit capable of performing printing functions as found in the related art. That is, both the container assembly 100 and the aforementioned printing device may be protected individually. The printing system formed by combining the two may also be protected. Furthermore, the printing system formed by combining the aforementioned container assembly 100 with an existing printing device is also within the scope of protection.

Finally, it should be noted that the above embodiments are intended merely to illustrate the technical solutions of the present application and are not intended to limit it; although the present application has been described in detail with reference to the aforementioned embodiments, those skilled in the art will understand that modifications may still be made to the technical solutions described in the aforementioned embodiments, or that some or all of the technical features may be replaced by equivalents; and such modifications or replacements do not cause the essence of the corresponding technical solutions to deviate from the scope of the technical solutions of the embodiments of the present application.

## Claims

1. A container assembly (100), comprising:
an accommodating chamber;
an opening (114) communicating with the accommodating chamber;
a light-transmitting assembly (20) arranged on one end of the accommodating chamber and configured to allow light to pass through and thus enter the accommodating chamber, and
a packaging structure for sealing the opening.

2. The container assembly according to claim 1, wherein the accommodating chamber is preloaded with a printing material.

3. The container assembly according to claim 2, wherein the container assembly comprises an outer cylinder (110) and a platform assembly (120);
a cavity of the outer cylinder (110) serves as the accommodating chamber; one end of the outer cylinder (110) is provided with the opening communicating with the accommodating chamber; the light-transmitting assembly (20) is arranged on other end of the outer cylinder (110) opposite to the opening;
wherein the opening of the outer cylinder (110) is configured to allow the platform assembly (120) to move into and out of the accommodating chamber; and the packaging structure mates with the outer cylinder (110) to encapsulate the printing material and/or the platform assembly (120) inside the outer cylinder (110).

4. The container assembly according to claim 1, wherein the container assembly comprises an outer cylinder (110) and a platform assembly (120);
wherein the platform assembly (120) is slidably connected to a cavity of the outer cylinder (110); the platform assembly (120) is dynamically sealed and mated with the outer cylinder (110) and partitions to form the build chamber (140) inside the cavity of the outer cylinder (110); the build chamber (140) is located between the platform assembly (120) and the light-transmitting assembly (20); the accommodating chamber comprises the build chamber (140); the opening comprises a vent (123) communicating with the accommodating chamber; and the packaging structure seals the vent.

5. The container assembly according to claim 4, wherein the platform assembly (120) comprises an inner cylinder; the build platform (30) is disposed on an end of the inner cylinder facing the light-transmitting assembly (20); a cavity of the inner cylinder communicates with the build chamber; the accommodating chamber includes the cavity of the inner cylinder; and the vent is arranged at a top of the platform assembly (120).

6. The container assembly according to claim 5, wherein the build platform (30) is provided with a flow port for communicating the cavity of the inner cylinder with the build chamber.

7. The container assembly according to claim 4, wherein the platform assembly (120) is provided with a protruding portion (127), and the vent (123) is arranged on an end face of the protruding portion (127); and
wherein along a protruding direction, a cross-sectional area of the protruding portion (127) gradually decreases.

8. The container assembly according to claim 4, wherein the packaging structure is arranged on an outer side of the vent (123).

9. The container assembly according to claim 4, wherein the packaging structure is sheet-shaped to realize flexible sealing of the vent (123);
or, the packaging structure is a tearable pull-off structure provided with a tear-off section;
or, the packaging structure is a disposable sealing structure;
or, the packaging structure is configured as a single-layer structure or a multi-layer structure.

10. The container assembly according to claim 9, wherein the packaging structure comprises an aluminum foil layer, and/or the packaging structure comprises a heat-shrinkable film.

11. The container assembly according to claim 1, wherein the packaging structure comprises a cap assembly.

12. A printing system (10), comprising;
a container assembly (100), wherein the container assembly (100) comprises an outer cylinder (110) and a platform assembly (120), and the platform assembly (120) is longitudinally slidably disposed within a cavity of the outer cylinder (110);
wherein a receiving chamber (121) for receiving a liquid printing material is formed inside the platform assembly (120); a fluid outlet (122) communicating with the receiving chamber is provided at a bottom end of the platform assembly (120), and a bottom end face of the platform assembly (120) forms a build platform; and
an optical engine, configured to emit light for curing;
wherein a light-transmitting assembly is arranged at a bottom end of the outer cylinder (110), the light-transmitting assembly being configured to allow light emitted by the optical engine to pass therethrough and irradiate a region between the build platform and the light-transmitting assembly;
wherein the build platform, an inner wall of the outer cylinder (110), and the light-transmitting assembly collectively define a build chamber (140);
wherein when gas is injected into the receiving cavity, air pressure inside the receiving cavity increases, and the air pressure acts on the liquid printing material to drive the liquid printing material to flow through the fluid outlet (122) into the build chamber (140).

13. The printing system (10) according to claim 12, wherein the platform assembly (120) is provided with a vent (123) in communication with the receiving chamber (121) and configured to allow gas into the receiving chamber (121).
